# EUROPEAN PATENT APPLICATION

(11) **EP 4 206 502 A1**
(43) Date of publication of application: **05.07.2023**
(21) Application number: 21879267.9
(22) Date of filing: 29.09.2021
(51) Int. Cl.: F16K 1/00, F16K 1/42, F16K 1/36, F16K 31/06

(54) **FLOW CONTROL VALVE**

(30) Priority: 12.10.2020 CN 202011085908
(71) Applicant: Zhejiang Dunan Artificial Environment Co., Ltd., Shaoxing Zhejiang 311835 (CN)
(72) Inventor: ZHAN, Shaojun, Shaoxing Zhejiang 311835 (CN); CHEN, Yonghao, Shaoxing Zhejiang 311835 (CN); XU, Guanjun, Shaoxing Zhejiang 311835 (CN)
(74) Representative: Berggren Oy
(86) International application number: PCT/CN2021/121858
(87) International publication number: WO 2022/078221

(57) **Abstract**

Disclosed is a flow regulating valve. The flow regulating valve includes: a valve body structure (10), where the valve body structure (10) includes a main body and a sealing seat (11) connected with the main body, the sealing seat (11) is provided with a valve port, and the sealing seat (11) is made of a nonmetallic material; and a valve head (20) movably arranged in a cavity of the main body to close or open the valve port, where the valve head (20) is made of a metal material, and a hardness of the sealing seat (11) is less than a hardness of the valve head (20).

## Description

### Technical Field

The invention relates to the technical field of flow regulating valves, in particular to a flow regulating valve.

### Background

In general, a valve port of a flow regulating valve is opened or closed through movement of a valve head in a valve body. In an art known to inventors, a periphery of an end of the valve head usually contacts with an inner wall of the valve port to form a sealing surface, so as to achieve sealing to close the valve port. However, the valve head and the valve body are both in a metal structure, and come into hard contact with each other when the valve port is closed, resulting in small contact areas and poor sealing performance.

### Summary

Some embodiments of the invention provide a flow regulating valve for improving sealing performance of the flow regulating valve.

In order to achieve the above objective, the invention provides a flow regulating valve. The flow regulating valve includes: a valve body structure, wherein the valve body structure includes a main body and a sealing seat connected with the main body, the sealing seat is provided with a valve port, and the sealing seat is made of a nonmetallic material; and a valve head movably arranged in a cavity of the main body to close or open the valve port, wherein the valve head is made of a metal material, and a hardness of the sealing seat is less than a hardness of the valve head.

According to the solution, since the sealing seat is made of the nonmetallic material with the hardness less than the hardness of the valve head, when the valve port is closed, the valve head comes into contact with the sealing seat, and the sealing seat is elastically deformed, such that a large contact area between the sealing seat and the valve head is achieved, and a sealing effect of the valve port is improved.

In some embodiments, the sealing seat is made of plastic. By using the plastic material, large elastic deformation of the sealing seat is achieved, such that the sealing effect is improved and a manufacturing cost is low.

In some embodiments, the main body includes a valve seat and a cylinder that are connected to each other, a mounting cavity is provided between the valve seat and the cylinder, and a part of the sealing seat is located in the mounting cavity. Through the above arrangement, arrangement and mounting of the sealing seat are facilitated.

In some embodiments, an inner side of the valve seat is provided with a first limit step, a first end of the sealing seat is provided with a second limit step, the second limit step abuts against the first limit step, and a second end of the sealing seat abuts against the cylinder. In this way, through cooperation between the first limit step and the second limit step, the sealing seat is accurately positioned and limited.

In some embodiments, an outer side of the valve seat is provided with a first matching step, the cylinder is provided with a second matching step, and the second matching step matches with the first matching step. Through cooperation between the second matching step and the first matching step, accurate position of the valve seat and the cylinder is achieved, thus facilitating assembly and connection of the valve seat to the cylinder.

In some embodiments, each of the cylinder and the valve seat is made of a metal material, and the cylinder and the valve seat are welded to fix and clamp the sealing seat. Specifically, laser welding may be used. Through welding, connection is firm and desirable reliability is achieved.

In some embodiments, the flow regulating valve further includes: a first valve tube, wherein the first valve tube is connected with the valve seat; and a second valve tube, wherein the second valve tube is connected with the cylinder. Through the first valve tube and the second valve tube, the flow regulating valve may be connected to other tubes. After the valve port is opened, the first valve tube is in communication with the second valve tube.

In some embodiments, an inner wall of the valve port is provided with a conical surface. Through cooperation between the conical surface and the valve head, it is easy to adjust a flow.

In some embodiments, the flow regulating valve further includes: a guide sleeve arranged in the cavity of the main body, wherein the valve head is movably arranged in the guide sleeve; and a drive portion, where the drive portion is in drive connection to the valve head, so as to drive the valve head to move. The guide sleeve is used for guiding the valve head. The drive portion may use an electromagnetic drive mode.

In some embodiments, the flow regulating valve is an electronic expansion valve.

According to the technical solution of the embodiments of the invention, the flow regulating valve is provided. The flow regulating valve includes: the valve body structure and the valve head, wherein the valve body structure includes the main body and the sealing seat connected with the main body, the sealing seat is provided with the valve port, and the sealing seat is made of the nonmetallic material; and the valve head is movably arranged in the cavity of the main body to close or open the valve port, the valve head is made of the metal material, and the hardness of the sealing seat is less than the hardness of the valve head. According to the solution, since the sealing seat is made of the nonmetallic material with the hardness less than the hardness of the valve head, when the valve port is closed, the valve head comes into contact with the sealing seat, and the sealing seat is elastically deformed, such that the large contact area between the sealing seat and the valve head is achieved, and the sealing effect of the valve port is improved.

### Brief Description of the Drawings

As a constituent part of the invention, the drawings of the description are used to provide further understanding of the invention, and exemplary examples of the invention and description thereof serve to explain the invention, and do not constitute improper limitation to the invention. In the accompanying drawings:
Fig. 1 shows a schematic structural diagram of a flow regulating valve according to an embodiment of the invention;
Fig. 2 shows a partial enlarged view of the flow regulating valve in Fig. 1;
Fig. 3 shows a perspective view of part of a structure in Fig. 1; and
Fig. 4 shows an exploded view of Fig. 3.

The accompanying drawings include the following reference numerals:
10. valve body structure; 11. sealing seat; 111. second limit step; 112. conical surface; 12. valve seat; 121. first limit step; 122. first matching step; 13. cylinder; 131. second matching step; 20. valve head; 31. first valve tube; 32. second valve tube; 40. guide sleeve; and 50. drive portion.

### Detailed Description of the Embodiments

Technical solutions in examples of the invention will be described below clearly and comprehensively in conjunction with accompanying drawings in the examples of the invention. Apparently, the described examples are merely some examples rather than all examples of the invention. The following description of at least one exemplary example is merely illustrative in effect, and is in no way intended to limit the invention, and an application or use thereof. Based on the examples of the invention, all other examples derived by those of ordinary skill in the art without making creative efforts shall fall within the protection scope of the invention.

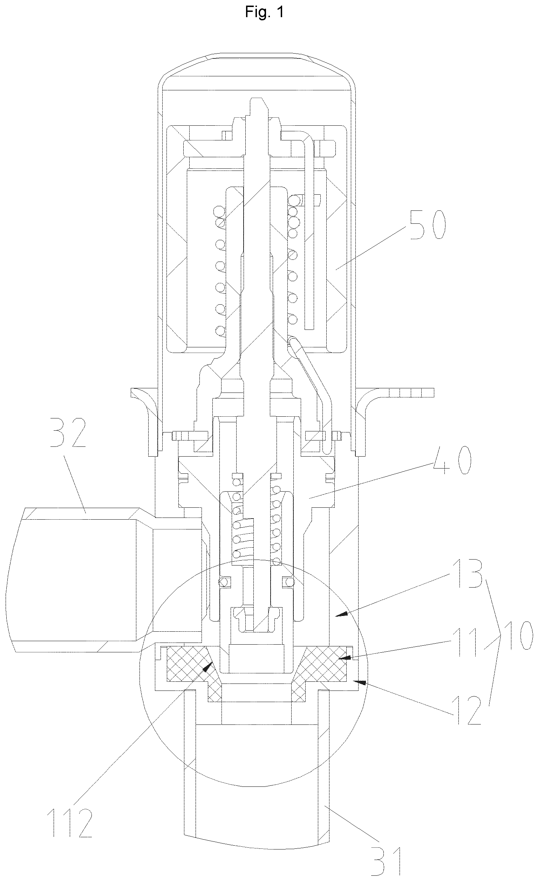

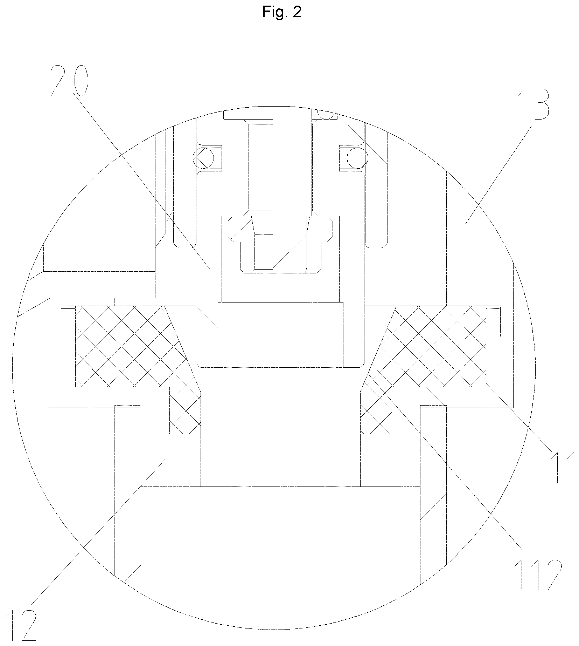

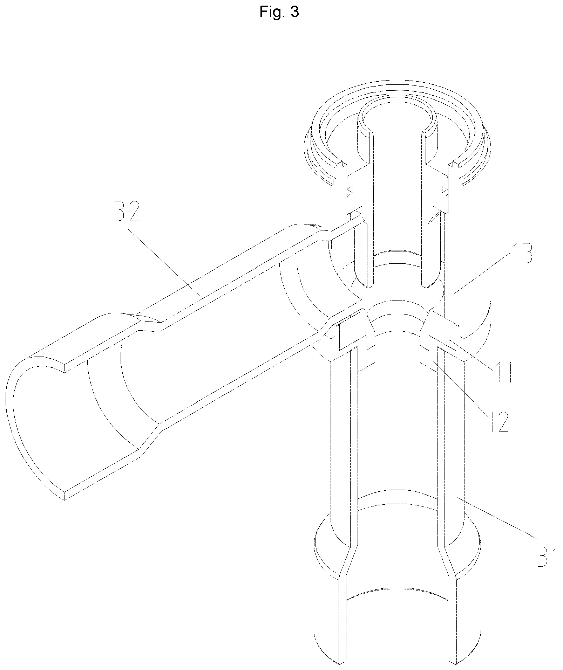

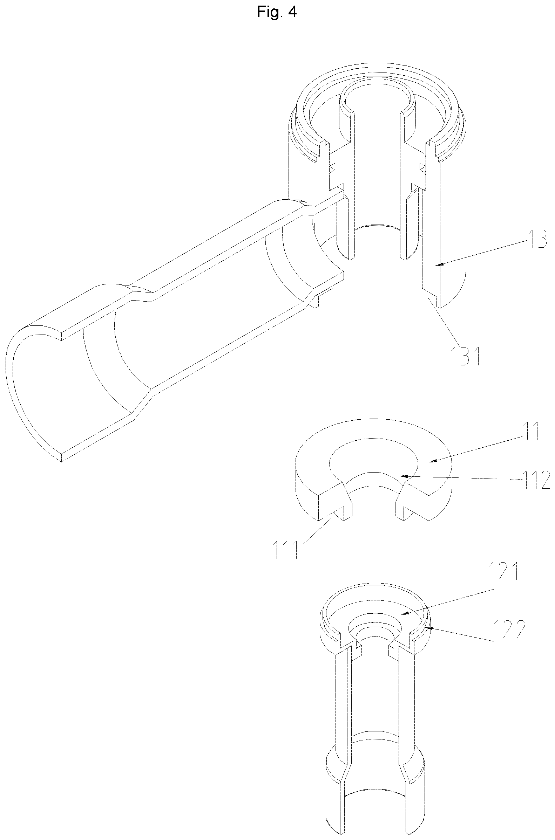

As shown in Figs. 1-4, the examples of the invention provide a flow regulating valve. The flow regulating valve includes: a valve body structure 10, where the valve body structure 10 includes a main body and a sealing seat 11 connected with the main body, the sealing seat 11 is provided with a valve port, and the sealing seat 11 is made of a nonmetallic material; and a valve head 20 is movable in a cavity of the main body to close or open the valve port, where the valve head 20 is made of a metal material, and a hardness of the sealing seat 11 is less than a hardness of the valve head 20.

According to the solution, since the sealing seat 11 is made of the nonmetallic material with the hardness less than the hardness of the valve head 20, when the valve port is closed, the valve head 20 contacts with the sealing seat 11, and the sealing seat 11 is elastically deformed, such that a large contact area between the sealing seat 11 and the valve head 20 is achieved, and a sealing effect of the valve port is improved.

In an embodiment, the sealing seat 11 is made of plastic. By using the plastic material, large elastic deformation of the sealing seat 11 is achieved, such that the sealing effect is improved and a manufacturing cost is low.

Specifically, the main body includes a valve seat 12 and a cylinder 13 that are connected to each other, a mounting cavity is provided between the valve seat 12 and the cylinder 13, and a part of the sealing seat 11 is located in the mounting cavity. Through the above arrangement, arrangement and mounting of the sealing seat 11 are facilitated.

In some embodiments, an inner side of the valve seat 12 is provided with a first limit step 121, a first end of the sealing seat 11 is provided with a second limit step 111, the second limit step 111 abuts against the first limit step 121, and a second end of the sealing seat 11 abuts against the cylinder 13. In this way, through cooperation between the first limit step 121 and the second limit step 111, the sealing seat 11 is accurately positioned and limited.

In the embodiment, an outer side of the valve seat 12 is provided with a first matching step 122, the cylinder 13 is provided with a second matching step 131, and the second matching step 131 matches the first matching step 122. Through cooperation between the second matching step 131 and the first matching step 122, accurate positioning of the valve seat 12 and the cylinder 13 is achieved, thus it is easy to assemble and connect the valve seat and the cylinder.

In the embodiment, each of the cylinder 13 and the valve seat 12 is made of a metal material, and the cylinder 13 and the valve seat 12 are welded to fix and clamp the sealing seat 11. After the cylinder 13 and the valve seat 12 are welded into a whole structure, a periphery of the sealing seat 11 is clamped and fixed in the mounting cavity. Specifically, laser welding is used. Through welding, connection is firm and better sealing performance is achieved.

In the embodiment, the flow regulating valve further includes: a first valve tube 31, where the first valve tube 31 is connected with the valve seat 12; and a second valve tube 32, where the second valve tube 32 is connected with the cylinder 13. Through the first valve tube 31 and the second valve tube 32, the flow regulating valve may be connected to other tubes. After the valve port is opened, the first valve tube 31 is in communication with the second valve tube 32.

In the embodiment, an inner wall of the valve port is provided with a conical surface 112. Through cooperation between the conical surface 112 and the valve head 20, it is easy to adjust a flow.

In the embodiment, the flow regulating valve further includes: a guide sleeve 40 arranged in the cavity of the main body, where the valve head 20 is movably arranged in the guide sleeve 40; and a drive portion 50, where the drive portion 50 is in drive connection to the valve head 20, so as to drive the valve head 20 to move. The guide sleeve 40 is used for guiding the valve head 20. The drive portion 50 may use an electromagnetic drive mode.

The flow regulating valve may be an electronic expansion valve or a valve in another type.

What are described above are some embodiments of the invention and are not intended to limit the invention, and for those skilled in the art, various modifications and changes can be made to the invention. Any modification, equivalent substitution, improvement, etc. made within the spirit and principles of the invention shall fall within the protection scope of the invention.

## Claims

1. A flow regulating valve, comprising:
a valve body structure (10), wherein the valve body structure (10) comprises a main body and a sealing seat (11) connected with the main body, the sealing seat (11) is provided with a valve port, and the sealing seat (11) is made of a nonmetallic material; and
a valve head (20) movably arranged in a cavity of the main body to close or open the valve port, wherein the valve head (20) is made of a metal material, and a hardness of the sealing seat (11) is less than a hardness of the valve head (20).

2. The flow regulating valve as claimed in claim 1, wherein the sealing seat (11) is made of plastic.

3. The flow regulating valve as claimed in claim 1, wherein the main body comprises a valve seat (12) and a cylinder (13) that are connected to each other, a mounting cavity is provided between the valve seat (12) and the cylinder (13), and a part of the sealing seat (11) is located in the mounting cavity.

4. The flow regulating valve as claimed in claim 3, wherein an inner side of the valve seat (12) is provided with a first limit step (121), a first end of the sealing seat (11) is provided with a second limit step (111), the second limit step (111) abuts against the first limit step (121), and a second end of the sealing seat (11) abuts against the cylinder (13).

5. The flow regulating valve as claimed in claim 3, wherein an outer side of the valve seat (12) is provided with a first matching step (122), the cylinder (13) is provided with a second matching step (131), and the second matching step (131) cooperates with the first matching step (122).

6. The flow regulating valve as claimed in claim 3, wherein each of the cylinder (13) and the valve seat (12) is made of a metal material, and the cylinder (13) and the valve seat (12) are welded to fix and clamp the sealing seat (11).

7. The flow regulating valve as claimed in claim 3, further comprising:
a first valve tube (31), wherein the first valve tube (31) is connected with the valve seat (12); and
a second valve tube (32), wherein the second valve tube (32) is connected with the cylinder (13).

8. The flow regulating valve as claimed in claim 1, wherein an inner wall of the valve port is provided with a conical surface (112).

9. The flow regulating valve as claimed in claim 1, further comprising:
a guide sleeve (40) arranged in the cavity of the main body, wherein the valve head (20) is movably arranged in the guide sleeve (40); and
a drive portion (50), wherein the drive portion (50) is in drive connection with the valve head (20) to drive the valve head (20) to move.

10. The flow regulating valve as claimed in claim 1, wherein the flow regulating valve is an electronic expansion valve.
